# EUROPÄISCHE PATENTSCHRIFT

(11) **EP 3 563 667 B1**
(45) Veröffentlichungstag und Bekanntmachung des Hinweises auf die Patenterteilung: **17.03.2021**
(21) Anmeldenummer: 19176399.4
(22) Anmeldetag: 04.05.2018
(51) Int. Cl.: A01F 25/18, A01B 63/111, A01B 69/00

(54) **VERFAHREN ZUR VERTEILUNG VON ERNTEGUT**
METHOD FOR DISTRIBUTING HARVESTED MATERIAL
PROCÉDÉ DE DISTRIBUTION DE PRODUIT DE RÉCOLTE

(30) Priorität: 19.05.2017 DE 102017208558
(43) Veröffentlichungstag der Anmeldung: 06.11.2019
(62) Teilanmeldung aus: 18170904.9
(73) Patentinhaber: Deere & Company, Moline, IL 61265 (US)
(72) Erfinder: Gresch, Valentin, 68163 Mannheim (DE); Reinmuth, Florian, 68163 Mannheim (DE); Fritz, Norbert, 68163 Mannheim (DE); Waibel, Christian, 68163 Mannheim (DE); Kremmer, Martin, 68163 Mannheim (DE); Schott, Florian, 68163 Mannheim (DE)
(74) Vertreter: Dehnhardt, Florian Christopher

(56) Entgegenhaltungen:
- EP-A2- 1 508 264
- DE-A1- 2 615 525
- FR-A1- 2 453 598

## Beschreibung

Die Erfindung betrifft ein Verfahren zur Verteilung von bereitgestelltem Erntegut mittels eines Verteilwerkzeugs während eines Verteilungsvorganges, wobei das Verteilwerkzeug an einer landwirtschaftlichen Arbeitsmaschine beweglich gelagert ist und zumindest teilweise automatisch derart bewegungsgesteuert wird, dass eine definierte Arbeitshöhe des Verteilwerkzeugs relativ zu einer Referenz-Oberfläche eingestellt wird.

Landwirtschaftliche Arbeitsmaschinen werden u.a. zur Bearbeitung von Erntegut verwendet. EP 1 825 740 A1 ist entnehmbar, dass die Verdichtungseigenschaften von Erntegut von großer Bedeutung für die Optimierung von Erntegut-Verdichtungsvorgängen sind, etwa bei der Einlagerung von Erntegut in Silos. Dabei werden einzelne Erntegutlagen aufgetragen und verdichtet.

Des Weiteren ist aus der EP 3 338 532 A1, welche zum Stand der Technik nach Artikel 54 (3) EPÜ gehört, ein Verfahren zum Entladen eines Erntegutwagens beschrieben, bei dem ein Erntegutteppich in einem Fahrsilo erzeugt wird, indem mittels eines Entladeförderers aus einem Laderaum des Erntegutwagens Erntegut entladen wird, während der Erntegutwagen entlang eines Fahrwegs durch das Fahrsilo fährt. Dies erfolgt automatisiert in Abhängigkeit sensorisch erfasster Erntegutteppich-Parameter derart, dass ein gleichmäßiger Erntegutteppich gewünschter Dicke und/oder gewünschter Breite erzielt wird.

Die EP 1 508 264 A2 offenbart eine Bodenbearbeitungsvorrichtung mit automatischer Höhenverstellung, die es ermöglicht, Strohrückstände auf einem abgeernteten Stoppelfeld gleichmäßig auf dem Boden zu verteilen. Hierzu weist die an einem Schlepper anbringbare Bodenbearbeitungsvorrichtung ein Striegelelement auf, das sich auf Veranlassung einer Steuereinrichtung mittels eines Hydraulikzylinders anheben und absenken lässt. Während des Betriebs der Bodenbearbeitungsvorrichtung wird die Strohmenge am Striegelelement mittels einer Kraftmessdose in Form einer ausgeübten Kraft kontinuierlich erfasst und die so gemessene Kraft von der Steuereinrichtung mit einem frei wählbaren Grenzwert verglichen. Solange die gemessene Kraft unterhalb des frei wählbaren Grenzwertes liegt, verbleibt das Striegelelement in seiner vorbestimmten Arbeitsstellung. Erst wenn die gemessene Kraft erreicht wird, wird der Hydraulikzylinder von der Steuereinrichtung über einen Hydraulikventilblock derart betätigt, dass das Striegelelement vollständig ausgehoben wird. Danach wird das Striegelelement wieder in seine Arbeitsstellung verfahren, in der es solange verbleibt, bis die gemessene Kraft gegebenenfalls erneut den Grenzwert erreicht.

Der vorliegenden Erfindung liegt die Aufgabe zugrunde, Erntegut auf möglichst effiziente Weise gleichmäßig zu verteilen bzw. zu verdichten.

Diese Aufgabe wird gemäß den Merkmalen des Patentanspruchs 1 gelöst.

Gemäß Patentanspruch 1 wird bereitgestelltes Erntegut während eines Verteilungsvorganges durch ein Verteilwerkzeug verteilt, welches an einer landwirtschaftlichen Arbeitsmaschine beweglich gelagert ist. Hierbei befindet sich das Verteilwerkzeug beispielsweise in einem Frontbereich einer vorwärts fahrenden landwirtschaftlichen Arbeitsmaschine. Das Verteilwerkzeug ist vorzugsweise als ein Schiebeschild ausgebildet, welcher Erntegut vor sich herschiebt und verteilt. Alternativ kann das Verteilwerkzeug als ein Siloverteiler oder dergleichen ausgestaltet sein. Während des Verteilungsvorgangs und/oder eines Verdichtungsvorgangs wird das Verteilwerkzeug zumindest teilweise, vorzugsweise vollständig, automatisch derart bewegungsgesteuert, dass für eine zusätzliche Entlastung des Fahrers bzw. Bedieners der Arbeitsmaschine bei der gewünschten gleichmäßigen Verteilung des Ernteguts eine definierte Arbeitshöhe des Verteilwerkzeugs relativ zu einer Referenz-Oberfläche eingestellt wird. Hierbei wird die Arbeitshöhe während des Verteilungsvorgangs in Abhängigkeit eines während eines Verteilungsvorgangs noch zu verteilenden Rest-Ernteguts und einer noch verbleibenden Rest-Strecke entlang einer Verteilungsstrecke für die Verteilung des Ernteguts angepasst. Das Rest-Erntegut wird dabei über geeignete Erfassungsmittel (z.B. Sensorik, Stereokamera) hinsichtlich seines Volumens oder seiner Masse abgeschätzt. Die landwirtschaftliche Arbeitsmaschine weist dabei eine geeignete Anordnung zur Bewegungssteuerung des Verteilwerkzeugs auf. Diese Anordnung kann z.B. einen Kraftheber zur beweglichen Lagerung des Verteilwerkzeugs, ein den Kraftheber ansteuerndes Steuergerät und eine geeignete Sensorik enthalten.

Hierdurch kann die automatische Bewegungssteuerung während des Verteilungsvorgangs individuell an das noch zu verteilende Rest-Erntegut angepasst werden, um eine möglichst effiziente und gleichmäßige Verteilung zu erreichen.

Die Arbeitshöhe kann z.B. als ein Abstand zwischen einer Unterkante eines Schiebeschilds und der Referenz-Oberfläche definiert werden. Die vorgenannte Trajektorie und folglich die automatische Bewegungssteuerung des Verteilwerkzeugs kann dann in Abhängigkeit der definierten Arbeitshöhe erfolgen.

Die automatische Bewegungssteuerung des Verteilwerkzeugs ermöglicht dessen automatische und genaue Anpassung an physikalische und topographische Randbedingungen während des Verteilungsvorgangs. Hierdurch wird der Fahrer der Arbeitsmaschine während des Verteilungsvorgangs entlastet. Insgesamt wird eine exakte und zeiteffiziente Verteilung des Ernteguts unterstützt. Eine geeignete Sensorik zur Detektion des Verteilwerkzeugs und/oder seines Umfeldes, ein oder mehrere Steuergeräte zur Verarbeitung der detektierten Daten und erforderlichenfalls weitere Bauteile als Bestandteile einer Anordnung zur Bewegungssteuerung ermöglichen es, dass die automatische Bewegungssteuerung des Verteilwerkzeugs technisch einfach und kostengünstig realisiert wird. Insbesondere werden hierbei Daten von Sensoren verwendet, welche ohnehin bereits an der Arbeitsmaschine vorhanden sind, um routinemäßig andere Zwecke zu erfüllen.

Vorzugsweise wird das Verteilwerkzeug während des Verteilungsvorgangs, d.h. vom Beginn bis zum Ende des Verteilungsvorgangs, vollständig automatisch bewegungsgesteuert. Insbesondere kann ein Nutzer (z.B. ein Fahrer der landwirtschaftlichen Arbeitsmaschine) bei Bedarf die automatische Bewegungssteuerung durch eine manuelle Ansteuerung des Verteilwerkzeugs ersetzen.

Bei der landwirtschaftlichen Arbeitsmaschine handelt es sich allgemein um eine mobile Arbeitsmaschine für den landwirtschaftlichen Einsatz, insbesondere einen Traktor. Auch andere Arbeitsmaschinen, wie etwa Radlader oder Pistenraupen können ggf. eingesetzt werden, sofern sie für den Verteilungsvorgang angepasst bzw. umgebaut werden. Das Erntegut wird üblicherweise mit einem Ladewagen an die Verteilungsstelle angeliefert und dort mittels der Arbeitsmaschine verteilt.

Die Verteilungsstelle kann unterschiedlich ausgebildet sein. In einer bevorzugten Ausführungsform ist die Verteilungsstelle als ein Silo ausgebildet, welches insbesondere eine feste Bodenplatte und feste Seitenwände aufweist. Vorzugsweise wird frische oder vorgewelkte Biomasse (z.B. Grünfuttermittel) in das Silo eingebracht, dort schichtweise verteilt und verdichtet.

Um die Genauigkeit bei der automatischen Bewegungssteuerung des Verteilwerkzeugs zu unterstützen, wird vorzugsweise eine Position und/oder Orientierung des Verteilwerkzeugs in einem definierten Koordinatensystem bestimmt. Hierzu kann das Umfeld des Verteilwerkzeugs durch ein definiertes Koordinatensystem repräsentiert werden. Mit der Orientierung des Verteilwerkzeugs ist insbesondere dessen Neigung relativ zu einer definierten Bezugsachse oder Bezugsebene (z.B. der Erdvertikalen, Erdhorizontalen oder der Arbeitsmaschine) gemeint. Vorzugsweise werden die Koordinaten-Daten des Verteilwerkzeugs in einem globalen Koordinatensystem indirekt ermittelt, indem zunächst über ein satellitengestütztes Positionserfassungssystem (z.B. GNSS-Empfänger mit integrierter Inertial-Messeinheit) Positions- und Orientierungsdaten der Arbeitsmaschine ermittelt werden und durch Verarbeitung dieser Daten die Position und/oder Orientierung des Verteilwerkzeugs bestimmt werden.

Vorzugsweise werden die Position und/oder Orientierung des Verteilwerkzeugs relativ zu dem Silo bestimmt, welches mit Erntegut aufgefüllt werden soll. Zu diesem Zweck werden vorzugsweise das Silo und dessen seitliche Begrenzungen als Koordinaten in dem definierten Koordinatensystem abgespeichert. Die bekannte Position und/oder Orientierung des Verteilwerkzeugs kann dazu beitragen, mit hoher Genauigkeit eine (insbesondere dreidimensionale) Trajektorie für das Verteilwerkzeug zu berechnen, um eine effiziente und gleichmäßige Verteilung des Ernteguts in dem Silo zu unterstützen.

Unter Berücksichtigung der vorgenannten Koordinaten kann auch eine sinnvolle Fahrspur für die Arbeitsmaschine berechnet und dem Fahrer über eine optische Anzeigeeinheit, Display, oder dergleichen angezeigt werden. Folgt die Arbeitsmaschine während eines Verteilungsvorgangs der angezeigten Fahrspur, kann die berechnete Verteilwerkzeug-Trajektorie für die automatische Bewegungssteuerung des Verteilwerkzeugs verwendet werden. Beispielsweise wird das Verteilwerkzeug derart bewegungsgesteuert, dass seine untere Schildkante der vorgesehenen Verteilwerkzeug-Trajektorie folgt. Insbesondere wird die Verteilwerkzeug-Trajektorie während des Verteilungsvorgangs in Abhängigkeit von aktualisierten Daten automatisch bzw. dynamisch angepasst, wodurch eine gleichmäßige Verteilung des Ernteguts, insbesondere ein gleichmäßiger Aufbau des Silos, unterstützt wird.

Vorzugsweise wird bei oder nach Beendigung eines Verteilungsvorganges das Verteilwerkzeug automatisch angehoben, um eine zügige und behinderungsfreie Fahrt, insbesondere Rückfahrt, der Arbeitsmaschine aus dem Bereich der Verteilungsfläche zu ermöglichen.

Gemäß einer weiteren Ausgestaltung ist es vorteilhaft, für die automatische Bewegungssteuerung des Verteilwerkzeugs eine Referenz-Oberfläche zu berücksichtigen, welche als eine Oberflächenkontur entlang einer Verteilungsstrecke für die Verteilung des Ernteguts ermittelt oder detektiert wird. Diese Oberflächenkontur (z.B. eine Bodenplatte eines Silos oder eine bereits verteilte und/oder verdichtete Erntegut-Schicht) wird z.B. aus vorherigen Überfahrten über das bereits verteilte und verdichtete Erntegut ermittelt. Die Daten hierzu werden vorzugsweise über geeignete Erfassungsmittel und unter Berücksichtigung der Arbeitsmaschinen-Geometrie gewonnen. Diese Erfassungsmittel enthalten z.B. einen GNSS-Empfänger mit integrierter Inertial-Messeinheit und ergänzend eine Sensorik (Ultraschall oder Stereokamera).

Vorzugsweise wird die Arbeitshöhe derart definiert und während des Verteilungsvorgangs ggf. verändert, dass das bereitgestellte und zu verteilende Erntegut während eines einzigen Überquerens einer Verteilungsstrecke mittels des Verteilwerkzeugs vollständig verteilt ist. Hierdurch werden kostenverursachende Zusatzfahrten der Arbeitsmaschine zuverlässig vermieden.

Die variabel definierbare und ggf. veränderbare Arbeitshöhe ermöglicht insbesondere deren Anpassung an eine angestrebte gleichmäßige Schichtdicke des während eines Verteilungsvorgangs zu verteilenden Ernteguts. Die Schichtdicke kann dann, insbesondere mit einer Dicke von 20 cm bis 40 cm, vorzugsweise in Abhängigkeit von
- der Beschaffenheit des Ernteguts, und/oder
- einer Verdichtungsfähigkeit der Arbeitsmaschine oder eines anderen Fahrzeugs in Bezug auf die verteilte Erntegut-Schicht, und/oder
- einer von dem Verteilwerkzeug zu überquerenden Verteilungsstrecke, insbesondere einer Länge des Silos,
definiert werden.

In einer bevorzugten Ausführungsform wird die Lage bzw. Schicht des verteilten Ernteguts anschließend verdichtet. Dies bedeutet, dass sich nach einem Verteilungsvorgang, welcher insbesondere bereits nach einem einzigen Überqueren einer Verteilungsstrecke (z.B. entlang der Längserstreckung eines Silos) mittels des Verteilungswerkzeugs abgeschlossen werden kann, ein Verdichtungsvorgang anschließt. Der Verdichtungsvorgang enthält einen einzigen Verdichtungsdurchlauf bzw. Verdichtungszyklus (z.B. eine kombinierte Vorwärts- und Rückwärtsfahrt der zur Verdichtung verwendeten Arbeitsmaschine) oder eine Abfolge von mehreren Verdichtungszyklen (z.B. mehrere kombinierte Vorwärts- und Rückwärtsfahrten). Mit mehreren Verdichtungszyklen sind insbesondere mehrere aufeinanderfolgende Verdichtungsaktivitäten oder Überfahrten einer Arbeitsmaschine entlang derselben Verteilungsstrecke gemeint, bevor ein nächster Verteilungsvorgang startet.

Zur Verdichtung fährt beispielsweise dieselbe Arbeitsmaschine über das bereits verteilte Erntegut. In diesem Fall kann in bevorzugten Fällen bereits dessen Bereifung eine Verdichtung erzielen. Vorzugsweise wird das Verteilwerkzeug gegen ein Verdichtungswerkzeug in Gestalt einer Silowalze oder dergleichen ausgetauscht, wobei zur Vermeidung eines zeitaufwändigen Werkzeugtauschs auch das Verteilwerkzeug an einem Front-Kraftheber und das Verdichtungswerkzeug an einem Heck-Kraftheber der Arbeitsmaschine angebracht sein kann. Alternativ erfolgt die Verdichtung mittels einer anderen geeigneten Arbeitsmaschine mit einer Verdichtungsfunktion (z.B. mittels zugehöriger Reifen) und/oder einem Verdichtungswerkzeug. Bei einem Verteilungsvorgang führt die Arbeitsmaschine beispielsweise eine Vorwärtsfahrt entlang der Länge eines Silos durch, um entlang einer Verteilungsstrecke das bereitgestellte Erntegut zu verteilen. Bei einem Verdichtungsvorgang führt dieselbe oder eine andere Arbeitsmaschine einen Verdichtungszyklus oder mehrere Verdichtungszyklen entlang der Länge eines Silos durch.

In einer alternativen Ausführung werden die vorgenannte und nachfolgend detailliert offenbarte Verdichtung unabhängig von einer Kombination mit einem Merkmal oder mehreren Merkmalen des Patentanspruches 1 oder davon abhängiger Unteransprüche durchgeführt. Mit anderen Worten wird bei dieser alternativen Ausführung die hier offenbarte Verdichtung eines verteilten Ernteguts durchgeführt unabhängig davon, auf welche Weise oder mit welcher Arbeitsmaschine das Erntegut zuvor verteilt worden ist. Mit einer derart unabhängig vom Gegenstand des Patentanspruchs 1 durchgeführten Verdichtung eines bereits verteilten Ernteguts sind in bevorzugten Ausführungsformen einzelne oder mehrere der in den Unteransprüchen, der Beschreibung und den Zeichnungen offenbarten Merkmale kombinierbar. Dies bietet sich insbesondere für den Fall an, dass die Verteilung des Ernteguts zuvor auf konventionelle Weise, also ohne Unterstützung durch das erfindungsgemäße Verfahren zur automatischen Bewegungssteuerung erfolgt.

Um eine stabile Konservierung des Ernteguts zu gewährleisten, ist ein hoher Verdichtungsgrad wesentlich. Dies gilt insbesondere für frische oder vorgewelkte Biomasse oder Schnittgut, welches in ein Silo eingelagert und als Silage verfüttert wird. Um einen aktuellen Verdichtungsgrad hinreichend genau zu ermitteln, werden beispielsweise von einem Steuergerät gespeicherte oder einzugebende Parameter bzw. Kenngrößen herangezogen, um den Verdichtungsgrad zu berechnen. Vorzugsweise wird mindestens eine der folgenden Größen berücksichtigt:
- mindestens ein Parameter der zur Verdichtung verwendeten Arbeitsmaschine,
- mindestens ein Parameter des Ernteguts,
- eine Anzahl von während des aktuellen Verdichtungsvorgangs bereits durchgeführten Verdichtungszyklen.

Als spezifische Parameter der zur Verdichtung verwendeten Arbeitsmaschine sind maschinenspezifische Eigenschaften geeignet, wie z.B. Bereifung der Arbeitsmaschine, Reifenauflagefläche, Reifendruck, Reifenposition, Gewicht der Arbeitsmaschine, Achslastverteilung, geometrische Daten des Verteilwerkzeugs wie etwa Breite und Höhe, Position der Lagerpunkte des Verteilwerkzeugs an der Arbeitsmaschine. Beispielsweise werden einzelne Parameter wie Bereifung und Reifenposition (bzw. entsprechende Parameter eines Verdichtungswerkzeugs wie etwa einer Silowalze) aus einer Speichereinheit bzw. einer bereitgestellten Datenbank ausgewählt. Unter Berücksichtigung des Reifendrucks, welcher manuell in die Bedienungs-Schnittstelle eingegeben oder durch ein Reifendruck-Regelsystem gemessen werden kann, können anhand der Speichereinheit bzw. Datenbank entsprechende Reifenauflageflächen bestimmt werden. Für die Ermittlung des Verdichtungsgrades wird insbesondere ein Verdichtungsdruck berechnet, der von der jeweiligen Achslast, der Orientierung (Nick- und Rollwinkel) der zur Verdichtung verwendeten Arbeitsmaschine und der Reifenauflagefläche abhängt. Das Gewicht der Arbeitsmaschine (ggf. mit Zusatzgewicht und/oder Verteilwerkzeug) sowie eine Achslastverteilung können über die Bedienungs-Schnittstelle vom Bediener manuell vorgegeben werden. Alternativ können die Gewichtskraft der Arbeitsmaschine und deren Achslasten mittels eines verschiedene Kenngrößen an der Arbeitsmaschine verarbeitenden Verfahrens automatisch ermittelt und dann als Daten in der vorgenannten Speichereinheit zur Verfügung gestellt werden. Geometrische Daten des Verteilwerkzeugs und/oder des Verdichtungswerkzeugs werden vorzugsweise ebenfalls über die Bedienungs-Schnittstelle eingegeben und dann in der Speichereinheit abgespeichert. Alternativ können einzelne der vorgenannten Daten, anstatt über die Bedienungs-Schnittstelle, über eine externe elektronische Verbindung (z.B. Mobilfunk) an eine elektronische Schnittstelle der Arbeitsmaschine gesendet und dann z.B. über ein Steuergerät an die Speichereinheit weitergeleitet werden.

Spezifische Parameter des Ernteguts werden vorzugsweise über eine Bedienungs-Schnittstelle an der Arbeitsmaschine ausgewählt. Alternativ können relevante Parameter des Ernteguts direkt von der vorher tätigen Erntemaschine erfasst werden, z.B. über einen Sensor zur Feuchtigkeits- und Nährstoffermittlung oder über die Einstellung einer Häcksellänge bei Feldhäckslern. Diese Daten können dann von der Erntemaschine elektronisch (z.B. Mobilfunk) an die zur Verdichtung verwendete Arbeitsmaschine übermittelt werden. Als Parameter berücksichtigt werden insbesondere die Art des Ernteguts (z.B. Mais-Silage, Gras-Silage), die Feuchte des Ernteguts (z.B. feucht, mittelfeucht, trocken) und die Schnittlänge des Ernteguts. Feuchtes Erntegut lässt sich einfacher verdichten und benötigt deshalb eine geringere Anzahl von Verdichtungszyklen bzw. geringeren Verdichtungsdruck für einen ausreichenden Verdichtungsgrad. Ebenso ist die Schnittlänge relevant, da sich kürzeres Häckselgut besser verdichten lässt.

Vorzugsweise wird in Abhängigkeit von dem ermittelten aktuellen Verdichtungsgrad entschieden, ob eine zusätzliche Anzahl von Verdichtungszyklen innerhalb dieses aktuellen Verdichtungsvorgangs erforderlich ist. Die zusätzliche Anzahl kann ein einziger Verdichtungszyklus oder eine Abfolge mehrerer Verdichtungszyklen sein. Für einen effizienten Ablauf des Verdichtungsvorgangs ist es günstig, einem Bediener der Arbeitsmaschine die Anzahl ermittelter zusätzlicher Verdichtungszyklen über eine optische Anzeigeeinheit (Z.B. Display) einer Bedienungs-Schnittstelle mitzuteilen.

Insbesondere wird die Entscheidung, ob eine zusätzliche Anzahl von Verdichtungszyklen innerhalb dieses Verdichtungsvorgangs erforderlich ist, von einem Vergleich des ermittelten aktuellen Verdichtungsgrades mit einem vorgegebenen Wert eines Mindestverdichtungsgrades abhängig gemacht. Dieser Wert des Mindestverdichtungsgrades ist insbesondere von Eigenschaften bzw. Parametern des Ernteguts abhängig. Die Werte von Mindestverdichtungsgraden können aus empirischen Versuchen gewonnen und in einer Speichereinheit hinterlegt sein.

Bezüglich des Vergleichs eines aktuellen Verdichtungsgrades mit dem vorgegebenen Mindestverdichtungsgrad kann eine aktuelle Referenz-Oberfläche bzw. Oberflächenkontur im Bereich der Verteilungs- und Verdichtungsaktivitäten in Flächensegmente aufgeteilt werden. Die Überfahrten zugehöriger Reifen (z.B. Traktorreifen) der Arbeitsmaschine oder einzelner Walzensegmente im Falle einer daran angebrachten Silowalze werden für jede einzelne Flächensegment unter Berücksichtigung des Verdichtungsdrucks sowie der Fahrgeschwindigkeit aufsummiert. Ist ein von Eigenschaften des Ernteguts abhängiger Wert des Mindestverdichtungsgrades erreicht worden, wird das betreffende Flächensegment als ausreichend verdichtet gekennzeichnet. Einem Fahrer (oder einem automatisierten Lenksystem) der Verdichtungs-Arbeitsmaschine wird dann eine nächste Fahrbahn vorgegeben oder signalisiert, dass ein neuer Verteilungsvorgang durchgeführt werden kann. Werden im Bereich der Verteilungs- und Verdichtungsaktivitäten (z.B. in einem Silo) mehrere Arbeitsmaschinen eingesetzt, so können diese mittels einer elektronischen Schnittstelle (z.B. Mobilfunk) kommunizieren und Daten bezüglich erreichtem Verdichtungsgrad etc. für einzelne Flächensegmente sowie bezüglich geplanter oder ermittelter Verdichtungs- und Verteilungsvorgänge austauschen.

Das Verteilwerkzeug kann in einer Ausführungsform unmittelbar an einer Tragstruktur der Arbeitsmaschine beweglich gelagert sein. In diesem Fall kann die Position des Verteilwerkzeugs z.B. über zwei seitliche Hubzylinder verstellt werden. Eine Veränderung seiner Orientierung bzw. Neigung relativ zur Arbeitsmaschine ist hierbei oftmals nicht möglich. Um auch eine Veränderung der Orientierung relativ zur Arbeitsmaschine technisch einfach zu ermöglichen, ist das Verteilwerkzeug vorzugsweise über einen Kraftheber (insbesondere Front-Kraftheber) an der Arbeitsmaschine beweglich gelagert, d.h. mittelbar an der Tragstruktur der Arbeitsmaschine. Der Kraftheber ist vorzugsweise als Dreipunkt-Kraftheber mit einem Oberlenker oder als Vierpunkt-Kraftheber mit zwei Oberlenkern ausgebildet. An dem Kraftheber ist das Verteilwerkzeug gelenkig gelagert. Über eine geeignete Anordnung (z.B. Sensorik, Steuergerät) ist der Kraftheber ansteuerbar. Entsprechend ist das Verteilwerkzeug zumindest teilweise, insbesondere vollständig, automatisch bewegungssteuerbar.

In einer weiteren bevorzugten Ausführungsform ist die das Verteilwerkzeug tragende Arbeitsmaschine insbesondere für Nachtarbeiten mit einer Anordnung von Leuchtmitteln ausgestattet, welche einzeln aktiviert und deaktiviert oder ein- und ausgeschaltet werden können. Insbesondere ist die Anordnung der Leuchtmittel als eine Anordnung von Leuchtdioden (LED) an der Arbeitsmaschine ausgebildet. Die einzeln ansteuerbaren Leuchtmittel ermöglichen es, diese abhängig von dem aktuellen Arbeitsbereich der Arbeitsmaschine anzusteuern. Vorzugsweise erfolgt die Ansteuerung in Abhängigkeit von mindestens einem der folgenden Merkmale:
- einer Neigung des Verteilwerkzeugs, insbesondere relativ zur Arbeitsmaschine,
- einer Vorwärts- oder Rückwärtsfahrt der Arbeitsmaschine.

Hierdurch kann die Anordnung der Leuchtmittel beispielsweise auf Positions- und/oder Orientierungsänderungen des Verteilwerkzeugs reagieren. Leuchtmittel mit einem auf die aktuelle Position des Verteilwerkzeugs gerichteten Lichtkegel können aktiviert werden, während andere, nicht auf die aktuelle Position des Verteilwerkzeugs fokussierte Leuchtmittel deaktiviert werden oder bleiben. Folglich kann der aktuelle Arbeitsbereich vor oder hinter der Arbeitsmaschine optimal ausgeleuchtet werden, ohne dass etwaige Bediener oder Fahrer anderer Maschinen (z.B. Fahrer eines Ladewagens, welcher neues Erntegut anfährt) geblendet werden. Einzelne Leuchtmittel können in Fahrtrichtung nach vorne oder nach hinten gerichtet sein, so dass die Leuchtmittel auch abhängig von einer Vorwärts- oder Rückwärtsfahrt angesteuert werden können.

Das erfindungsgemäße Verfahren und eine entsprechende landwirtschaftliche Arbeitsmaschine werden im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine landwirtschaftliche Arbeitsmaschine mit einem Verteilwerkzeug in einer Seitenansicht,
- Fig. 2: die Arbeitsmaschine gemäß Fig. 1 während eines Verteilungsvorgangs, und
- Fig. 3: ein Blockschaltbild mit Darstellung einer Datenverarbeitung während eines Verdichtungsvorgangs.

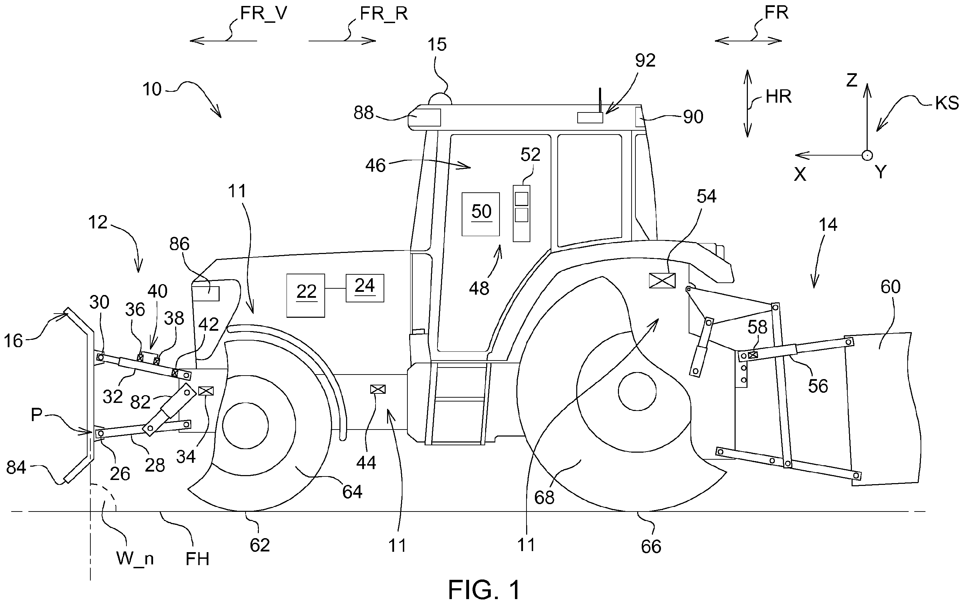

Fig. 1 zeigt eine als Traktor ausgebildete mobile und landwirtschaftliche Arbeitsmaschine 10 bzw. ein Fahrzeug mit einer Tragstruktur 11, an der ein Front-Kraftheber 12 und ein Heck-Kraftheber 14 gelagert sind. Am Front-Kraftheber 12 ist ein Verteilwerkzeug 16 in Form eines Schiebeschilds beweglich gelagert. Das Verteilwerkzeug 16 dient dem Verteilen und Nivellieren von Erntegut 18, z.B. Mais- oder Gras-Silage. In weiteren Ausführungsformen kann der Schiebeschild durch ein anderes Verteilwerkzeug 16 (z.B. Siloverteiler) ersetzt sein. Für eine Verdichtung des verteilten Ernteguts 20 kann am Front-Kraftheber 12 das Verteilwerkzeug 16 durch ein hier nicht dargestelltes Verdichtungswerkzeug (z.B. Silowalze) ausgetauscht werden.

Das Verteilwerkzeug 16 wird über den Front-Kraftheber 12 automatisch bewegungsgesteuert. Zu diesem Zweck wird der Front-Kraftheber 12 von einer Anordnung angesteuert, welche ein Steuergerät 22 und eine damit verbundene Speichereinheit 24 aufweist. Das Verteilwerkzeug 16 ist über zwei untere Koppelstellen 26 mit zwei quer zur Zeichenblattebene fluchtenden Unterlenkern 28 gelenkig verbunden. Über eine obere Koppelstelle 30 ist das Verteilwerkzeug 16 mit einem Oberlenker 32 gelenkig verbunden.

Durch einen Kalibriervorgang wird eine Position P (z.B. im Bereich noch zu beschreibender unterer Koppelstellen 26) und eine Orientierung (z.B. ein Neigungswinkel W_n einer Ebene des Verteilwerkzeugs 16 relativ zu einer Fahr-Horizontalen FH bzw. Fahrtrichtung FR oder relativ zu einer anderen Bezugsgröße wie etwa einer Hochrichtung HR der Arbeitsmaschine 10) des Verteilwerkzeugs 16 bei einer bestimmten Einstellung des Front-Krafthebers 12 festgestellt. Hierzu werden auch geometrische Daten des Verteilwerkzeugs 16 in der Speichereinheit 24 gespeichert. Ausgehend von der Kalibrierung können Positions- und Orientierungsänderungen des Verteilwerkzeugs 16 automatisch erreicht werden, indem das Steuergerät 22 den Front-Kraftheber 12 entsprechend ansteuert, sobald eine Positions- und/oder Orientierungsänderung als erforderlich ermittelt wird.

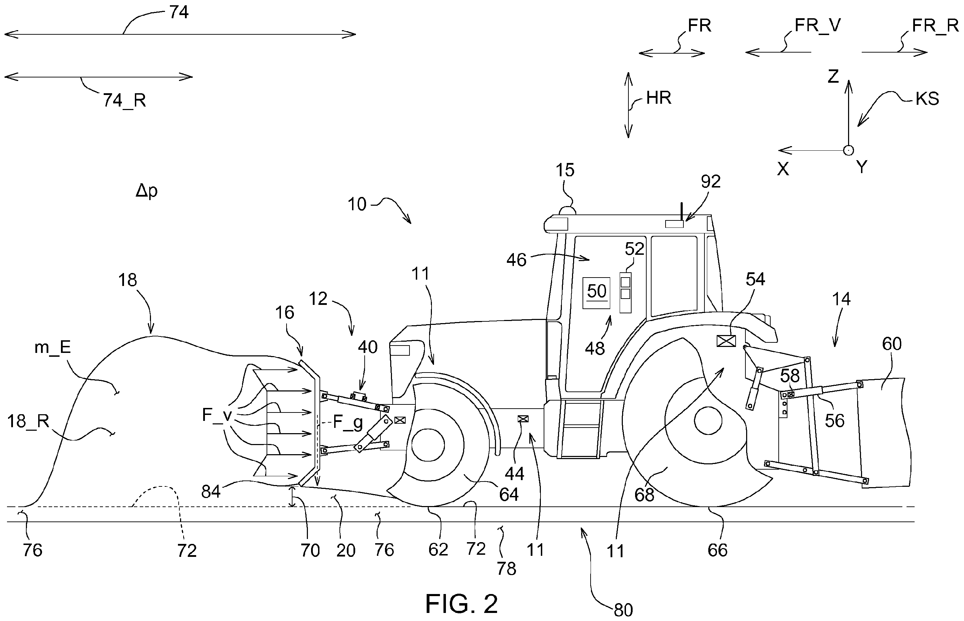

Zur Bestimmung der Position P und der Orientierung des Verteilwerkzeugs 16 in einem definierten (z.B. globalen) Koordinatensystem wird vorzugsweise zunächst eine Position und Orientierung der Arbeitsmaschine 10 über eine Empfängereinheit 15 (z.B. GNSS) mit einer integrierten Inertial-Messeinheit bestimmt. Durch Verarbeitung dieser Daten unter Berücksichtigung der Einstellung des Front-Krafthebers 12 kann dann die Position P und die Orientierung des Verteilwerkzeugs 16 bestimmt werden. In diesem Koordinatensystem können auch die Koordinaten eines Silos, insbesondere Flachsilo, mit seinen seitlichen Begrenzungen berücksichtigt werden. Dies ermöglicht eine Bestimmung der Position P und Orientierung des Verteilwerkzeugs 16 relativ zum Silo. Ein definiertes Koordinatensystem KS ist in Fig. 1 und Fig. 2 durch eine parallel zur Fahrtrichtung FR der Arbeitsmaschine 10 verlaufende x-Achse, eine parallel zur Hochrichtung HR der Arbeitsmaschine 10 verlaufende z-Achse und eine quer zur x-Achse und y-Achse verlaufende z-Achse angedeutet.

Eine Veränderung der Position P des Verteilwerkzeugs 16 erfolgt beispielsweise über eine Ermittlung und Anpassung einer Hubhöhe des Front-Krafthebers 12, insbesondere indem die Position der unteren Koppelstellen 26 bestimmt wird. Hierzu bestimmt ein Positionssensor 34 die Position der Unterlenker 28 und folglich bei bekannter Unterlenker-Geometrie indirekt auch die jeweilige Position der unteren Koppelstellen 26.

Der Oberlenker 32 ist mit einem Messsystem 40 zur Bestimmung der in longitudinaler Richtung entlang des Oberlenkers 32 wirkenden Kraft ausgestattet, deren Auswertung noch anhand von Fig. 2 erläutert wird. Mittels des Messsystems 40 ist diese Kraft bestimmbar. Im Ausführungsbeispiel enthält das Messsystem 40 einen Sperrblock mit zwei Drucksensoren 36, 38, welche einen hydraulischen Druck auf Stangen- und Kolbenseite eines Hydraulikzylinders am hydraulischen Oberlenker 32 messen. Über diese Druckmessung ist unter Berücksichtigung der Geometrie des Hydraulikzylinders die Kraft am hydraulischen Oberlenker 32 bestimmbar. Alternativ kann das Messsystem 40 im Falle eines mechanischen Oberlenkers 32 beispielsweise durch einen Kraftmessbolzen ersetzt werden, welcher zur Bestimmung der Kraft am Oberlenker 32 an der oberen Koppelstelle 30 oder an der gegenüberliegenden Koppelstelle zwischen dem Oberlenker 32 und der Tragstruktur 11 positioniert ist.

Eine Veränderung der Orientierung des Verteilwerkzeugs 16 erfolgt beispielsweise über eine Ermittlung und Anpassung einer Winkellage des Oberlenkers 32 relativ zur Arbeitsmaschine 10. Hierzu ist der Oberlenker 32 mit einem Messsystem 42 zur Bestimmung der Orientierung, d.h. einer Winkellage, des Oberlenkers 32 relativ zur Arbeitsmaschine 10 ausgestattet. In einer bevorzugten Ausführungsform ist das Messsystem 42 als eine in ein Kreuzgelenk zwischen Oberlenker und Tragstruktur 11 integrierte Inertial-Messeinheit ausgebildet. Diese Inertial-Messeinheit misst Beschleunigungen und Drehraten in allen drei Raumrichtungen. Die Arbeitsmaschine 10 weist ebenfalls eine Inertial-Messeinheit 44 auf. Diese kann auch zur Überwachung der Orientierung und Dynamik der Arbeitsmaschine 10 verwendet werden. Durch Abgleich der Sensordaten beider Inertial-Messeinheiten 42, 44 ist die Winkellage des Oberlenkers 32 relativ zur Arbeitsmaschine 10 bestimmbar. Alternativ kann die vorgenannte Winkellage über ein in den Oberlenker 32 integriertes Längen-Messsystem und über Daten bezüglich der Geometrie des Front-Krafthebers 12 bestimmt werden.

Wie bereits erwähnt, dient das Steuergerät 22 insbesondere einer Verarbeitung von Daten der beschriebenen Sensorik sowie zur Ansteuerung der Kraftheber 12, 14. In der Speichereinheit 24 ist vorzugsweise eine Datenbank hinterlegt zur Speicherung von Daten, welche für die Verteilung und/oder Verdichtung des Ernteguts 18 relevant sind. Dabei handelt es sich beispielsweise um maschinenspezifische Daten (z.B. Bereifung der Arbeitsmaschine, Reifendruck, Reifenauflagefläche, Reifenposition, Gewicht der Arbeitsmaschine, Achslastverteilung, Geometrie des Verteilwerkzeugs, Position von Koppelstellen 26, 30 des Verteilwerkzeugs 16). In einer Kabine 46 der Arbeitsmaschine 10 befindet sich eine Bedienungs-Schnittstelle 48 mit einer optischen Anzeigeeinheit 50 (z.B. Display) und einer Eingabeeinheit 52. Die Bedienungs-Schnittstelle 48 dient zur Eingabe von Kalibrier- und Prozessparametern, zur optischen Darstellung der Verteilungs- und/oder Verdichtungsvorgänge sowie zur assistierten Navigation der Arbeitsmaschine.

An dem Heck-Kraftheber 14 ist ebenfalls eine Sensorik bzw. sind Messsysteme angeordnet, u.a. zur Bestimmung der Kraftheber-Position (mittels eines Messsystems 54), einer Winkellage eines Oberlenkers 56 (mittels eines Messsystems 58) und einer Kraft am Oberlenker 56. An dem Heck-Kraftheber 14 ist ein Anbaugerät 60 in Form eines Zusatzgewichtes gelagert. Es dient dazu, die Gesamtmasse der Arbeitsmaschine 10 zu erhöhen, um die Radlasten und damit den für die Verdichtung des Ernteguts 18 wirksamen Druck an Reifenauflageflächen 62 von Vorderreifen 64 und an Reifenauflageflächen 66 von Hinterreifen 68 der Arbeitsmaschine 10 zu erhöhen. Prinzipiell wird auch - analog zum Verteilwerkzeug 16 - die Position bzw. Hubhöhe und die Orientierung des Zusatzgewichts 60 mittels einer entsprechenden Ansteuerung und Verstellung des Heck-Krafthebers 14 verändert in Abhängigkeit von einer Position und Orientierung der Arbeitsmaschine 10. Diese Veränderungen werden von dem Steuergerät 22 gesteuert, um die Radlasten zu optimieren.

Zur Entlastung eines Bedieners der Arbeitsmaschine 10 wird die Position P und/oder die Orientierung des Verteilwerkzeugs 16 automatisch eingestellt und ggf. automatisch verändert. Bei dieser automatischen Bewegungssteuerung des Verteilwerkzeugs 16 wird zwischen einem Verteilungsvorgang und einem Verdichtungsvorgang mit einem oder mehreren Verdichtungszyklen unterschieden.

In Fig. 2 ist dargestellt, dass bei einem Verteilungsvorgang das Verteilwerkzeug 16 derart bewegungsgesteuert ist, dass eine definierte Arbeitshöhe 70 des Verteilwerkzeugs 16 relativ zu einer Referenz-Oberfläche 72 eingestellt wird. Die Referenz-Oberfläche 72 wird aus vorangegangenen Überfahrten der Arbeitsmaschine 10 entlang einer Verteilungsstrecke 74 als eine Oberflächenkontur des bereits verteilten und verdichteten Ernteguts 76 detektiert. Das bereits verteilte und verdichtete Erntegut 76 liegt auf einer Bodenplatte 78 eines Flachsilos 80 auf. Die Arbeitshöhe wird insbesondere derart eingestellt, dass abhängig von der Beschaffenheit des Ernteguts 18 und der Verdichtungsfähigkeit seitens der Arbeitsmaschine 10 (oder einer anderen Arbeitsmaschine) die neue Schicht des verteilten Ernteguts 20 eine Schichtdicke von ca. 20 cm bis 40 cm aufweist. Hierzu steuert das Steuergerät 22 den Front-Kraftheber 12, insbesondere dessen Hubzylinder 82 derart an, dass das Verteilwerkzeug 16 bzw. dessen Unterkante 84 auf der definierten Arbeitshöhe 70 geführt wird. Wahlweise kann auch über die Bedienungs-Schnittstelle 48 vorgegeben werden, dass während der Überfahrt entlang der Verteilungsstrecke 74 die Orientierung des Verteilwerkzeugs 16 nachgeregelt wird. Ist diese Funktion aktiviert, wird über das Messsystem 42 die Winkellage des Oberlenkers 32 und unter Berücksichtigung der mittels des Positionssensors 34 abgeleiteten jeweiligen Position der unteren Koppelstellen 26 indirekt die Orientierung des Verteilwerkzeugs 16 bestimmt. Durch Ansteuerung des Oberlenkers 32 kann die Orientierung des Verteilwerkzeugs 16 derart nachgeführt werden, dass das Verteilwerkzeug unabhängig von einem Nickwinkel der Arbeitsmaschine 10 jederzeit vertikal zur Bodenplatte 78 oder zur Referenz-Oberfläche 72 oder zu einer anderen Bezugsebene angeordnet ist. Über die Bedienungs-Schnittstelle 48 und das Steuergerät 22 ist auch eine von der Vertikallage des Verteilwerkzeugs 16 gemäß Fig. 1 und Fig. 2 abweichende Orientierung einstellbar.

Ein Verteilungsvorgang ist vorzugsweise bereits beendet, wenn das Verteilwerkzeug 16 bzw. die Arbeitsmaschine 10 die Verteilungsstrecke 74 in Vorwärts-Fahrtrichtung FR_V ein einziges Mal überquert hat. Am Ende eines Verteilungsvorgangs, also nach vollständiger Verteilung des Ernteguts 18, wird das Verteilwerkzeug 16 relativ zum verteilten Erntegut 20 automatisch angehoben. Eine Rückfahrt der Arbeitsmaschine 10 in Rückwärts-Fahrtrichtung FR_R kann dann zügig ohne etwaige Hindernisse erfolgen. Auch während eines nachfolgenden Verdichtungsvorgangs bleibt das Verteilwerkzeug 16 vorzugsweise in der angehobenen Position. Alternativ wird das Verteilwerkzeug 16 gegen ein Verdichtungswerkzeug ausgetauscht, wobei zur Vermeidung eines zeitaufwändigen Werkzeugtauschs jedoch eine Anbringung des Verteilwerkzeugs 16 am Front-Kraftheber 12 und des Verdichtungswerkzeugs am Heck-Kraftheber 14 der Arbeitsmaschine 10 bevorzugt wird.

Vorzugsweise wird die Schichtdicke des neu aufgetragenen Ernteguts innerhalb eines Bereichs zulässiger Schichtdicken (z.B. von 20 cm bis 40 cm) derart abgeschätzt, dass das vor dem Verteilwerkzeug 16 liegende Erntegut 18 entlang der gesamten Verteilstrecke 74 des Silos 80 (z.B. Längserstreckung eines Silos) möglichst gleichmäßig verteilt wird. Insbesondere wird bei dieser Abschätzung auch berücksichtigt, dass sich nach Überqueren der Verteilungsstrecke 74 kein Erntegut 18 mehr vor dem Verteilwerkzeug 16 befinden soll. Entsprechend wird die Schichtdicke basierend auf der tatsächlich vor dem Verteilwerkzeug 16 geführten Erntegutmenge (z.B. Volumen, Masse) angepasst. Hierzu wird vorzugweise eine Masse m_E des Ernteguts 18 über eine Auswertung der Kraft am Oberlenker 32 bzw. eines Differenzdrucks Δp zwischen beiden Drucksensoren 36, 38 im Messsystem 40 abgeschätzt. Dabei ist der Differenzdruck Δp insbesondere abhängig von einer Gewichtskraft F_g des Verteilwerkzeugs 16 und von Kräften F_v, welche während des Verteilungsvorgangs vom Erntegut 18 auf das Verteilwerkzeug 16 ausgeübt werden. Basierend auf einer Auswertung des Differenzdrucks Δp bzw. der Kraft am Oberlenker 32 kann bestimmt werden, welche Masse m_E des Ernteguts 18 und somit welches Rest-Erntegut 18_R sich noch vor dem Verteilwerkzeug 16 befindet. Wird zur vollständigen Verteilung des Ernteguts 18 bzw. des Rest-Ernteguts 18_R entlang der Verteilungsstrecke 74 eine Anpassung der abgeschätzten Schichtdicke notwendig, so kann die Arbeitshöhe 70 unter Berücksichtigung einer noch verbleibenden Rest-Strecke 74_R entlang der Verteilungsstrecke 74 entsprechend angepasst bzw. verändert werden. Hierbei sei erwähnt, dass die in Fig. 2 dargestellte Verteilungsstrecke 74 und Rest-Strecke 74_R lediglich schematisch mit Pfeilen angedeutet und nicht maßstäblich sind.

Die Arbeitsmaschine 10 ist insbesondere für Nachtarbeiten mit mehreren Beleuchtungseinheiten 86, 88, 90 ausgestattet. Dieses adaptive Lichtsystem weist eine Vielzahl von Leuchtdioden auf, welche einzeln aktiviert und deaktiviert bzw. ein- und ausgeschaltet werden können. Die einzeln ansteuerbaren Leuchtdioden ermöglichen es, dass sie abhängig von dem aktuellen Arbeitsbereich der Arbeitsmaschine 10 angesteuert werden. Hierdurch können die Beleuchtungseinheiten 86, 88, 90 beispielsweise auf Positions- und/oder Orientierungsänderungen des Verteilwerkzeugs 16 reagieren. Folglich kann der aktuelle Arbeitsbereich vor oder hinter der Arbeitsmaschine 10 optimal ausgeleuchtet werden, ohne dass etwaige Bediener oder Fahrer anderer Maschinen (z.B. Fahrer eines Ladewagens mit neuem Erntegut) geblendet werden. Die Beleuchtungseinheiten 86, 88, 90 können auch abhängig von einer Vorwärts- oder Rückwärtsfahrt unterschiedlich angesteuert werden.

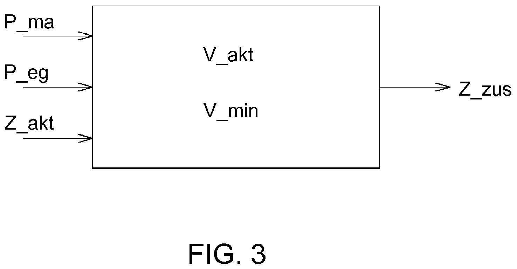

Während eines Verdichtungsvorgangs kann einem Bediener oder Fahrer der Arbeitsmaschine 10 an der Anzeigeeinheit 50 angezeigt werden, welche Anzahl von Verdichtungszyklen noch durchzuführen ist, bevor ein neuer Verteilungsvorgang durchgeführt werden kann. Hierzu wird eine während des aktuellen Verdichtungsvorgangs bereits erfolgte Verdichtung, d.h. ein aktueller Verdichtungsgrad V_akt ermittelt. Für diese Ermittlung werden gemäß Fig. 3 spezifische Parameter P_ma der Arbeitsmaschine 10 (oder einer anderen für die Verdichtung verwendeten Arbeitsmaschine), spezifische Parameter P_eg des Ernteguts 18 und die Anzahl Z_akt der während des aktuellen Verdichtungsvorgangs bereits durchgeführten Verdichtungszyklen berücksichtigt. Der Wert des ermittelten aktuellen Verdichtungsgrades V_akt wird mit einem vorgegebenen Wert eines Mindestverdichtungsgrades V_min verglichen. Dieser Wert des Mindestverdichtungsgrades V_min ist von Eigenschaften bzw. Parametern des Ernteguts 18 abhängig. Die Werte von Mindestverdichtungsgraden V_min sind in der Speichereinheit 24 hinterlegt. Abhängig vom Ergebnis des Vergleichs zwischen dem aktuellen Verdichtungsgrad V_akt und dem Mindestverdichtungsgrad V_min wird eine während des aktuellen Verdichtungsvorgangs noch durchzuführende zusätzliche Anzahl Z_zus von Verdichtungszyklen ermittelt und an der Anzeigeeinheit 50 signalisiert. Erreicht oder überschreitet der ermittelte aktuelle Verdichtungsgrad V_akt den zugeordneten Mindestverdichtungsgrad V_min, wird kein zusätzlicher Verdichtungszyklus ausgeführt. Während eines Verdichtungsvorgangs kann die ermittelte Anzahl Z_zus zusätzlicher Verdichtungszyklen aktualisiert werden.

Die Anzahl Z_akt der bereits durchgeführten Verdichtungszyklen und die Anzahl Z_zus von zusätzlichen Verdichtungszyklen können auch auf einzelne definierte Flächensegmente der Referenz-Oberfläche 72 bezogen sein. Ein Verdichtungszyklus besteht vorzugsweise aus einer Vorwärtsfahrt in Vorwärts-Fahrtrichtung FR_V und einer Rückwärtsfahrt in Rückwärts-Fahrtrichtung FR_R. Alternativ beinhaltet der Verdichtungszyklus nur eine Vorwärts- oder Rückwärtsfahrt. Ein Verdichtungszyklus kann auf eine Überfahrt entlang der gesamten Verdichtungsstrecke 74 oder auf eine Überfahrt entlang eines Abschnitts der Verdichtungsstrecke 74 für ein Flächensegment der Referenz-Oberfläche 72 bezogen sein.

Werden mehrere Arbeitsmaschinen 10 zur Beschickung des Silos 80 eingesetzt, so können diese mittels einer elektronischen Schnittstelle 92 (z.B. Mobilfunknetz) kommunizieren und Daten bezüglich erreichtem Verdichtungsgrad etc. für einzelne Flächensegmente der Referenz-Oberfläche 72 sowie bezüglich geplanter oder ermittelter Verdichtungs- und Verteilungsvorgänge austauschen.

## Patentansprüche

1. Verfahren zur Verteilung von bereitgestelltem Erntegut (18) mittels eines Verteilwerkzeugs (16) während eines Verteilungsvorganges, wobei das Verteilwerkzeug (16) an einer landwirtschaftlichen Arbeitsmaschine (10) beweglich gelagert ist und zumindest teilweise automatisch derart bewegungsgesteuert wird, dass eine definierte Arbeitshöhe (70) des Verteilwerkzeugs (16) relativ zu einer Referenz-Oberfläche (72) eingestellt wird, **dadurch gekennzeichnet, dass** die Arbeitshöhe (70) während des Verteilungsvorgangs in Abhängigkeit eines während eines Verteilungsvorgangs noch zu verteilenden und über Erfassungsmittel (36, 38) hinsichtlich seines Volumens oder seiner Masse abgeschätzten Rest-Ernteguts (18_R) und einer noch verbleibenden Rest-Strecke (74_R) entlang einer Verteilungsstrecke (74) für die Verteilung des Ernteguts (18) angepasst wird.

2. Verfahren nach Anspruch 1, **dadurch gekennzeichnet, dass** das bereitgestellte Erntegut (18) in einem Silo (80) verteilt wird.

3. Verfahren nach Anspruch 1 oder 2, **dadurch gekennzeichnet, dass** eine Position (P) und/oder eine Orientierung (W_n) des Verteilwerkzeugs (16) in einem definierten Koordinatensystem (KS) bestimmt wird.

4. Verfahren nach Anspruch 3, **dadurch gekennzeichnet, dass** die Position (P) und/oder Orientierung (W_n) des Verteilwerkzeugs (16) relativ zum Silo (80) bestimmt wird.

5. Verfahren nach einem der vorhergehenden Ansprüche, **dadurch gekennzeichnet, dass** die Referenz-Oberfläche (72) als eine Oberflächenkontur entlang einer Verteilungsstrecke (74) für die Verteilung des Ernteguts (18) ermittelt wird.

6. Verfahren nach einem der vorhergehenden Ansprüche, **dadurch gekennzeichnet, dass** die Arbeitshöhe (70) derart definiert wird, dass das bereitgestellte und zu verteilende Erntegut (18) während eines einmaligen Überquerens einer Verteilungsstrecke (74) mittels des Verteilwerkzeugs (16) vollständig verteilt wird.

7. Verfahren nach einem der vorhergehenden Ansprüche, **dadurch gekennzeichnet, dass** das verteilte Erntegut (18, 20) während eines Verdichtungsvorgangs verdichtet wird.

8. Verfahren nach Anspruch 7, **dadurch gekennzeichnet, dass** ein Verdichtungsgrad (V_akt) des verdichteten Ernteguts (76) in Abhängigkeit von mindestens einer der folgenden Größen ermittelt wird:
- mindestens einem Parameter (P_ma) einer zur Verdichtung verwendeten Arbeitsmaschine,
- mindestens einem Parameter (P_eg) des Ernteguts (18),
- einer Anzahl (Z_akt) von während des Verdichtungsvorgangs bereits durchgeführten Verdichtungszyklen.

9. Verfahren nach Anspruch 8, **dadurch gekennzeichnet, dass** in Abhängigkeit des ermittelten Verdichtungsgrades (V_akt) eine zusätzliche Anzahl (Z_zus) von Verdichtungszyklen während des verdichtungsvorgangs durchgeführt wird.

## Claims

1. Method for distributing provided harvested material (18) by means of a distribution tool (16) during a distribution operation, wherein the distribution tool (16) is mounted in a movable manner on an agricultural work machine (10) and is motion-controlled at least partially in an automatic manner such that a defined working height (70) of the distribution tool (16) relative to a reference surface (72) is set, **characterized in that** the working height (70) is adapted during the distribution operation depending on residual harvested material (18_R) that is still to be distributed during a distribution operation and is estimated in terms of its volume or its mass via sensing means (36, 38), and on a residual path (74_R) still remaining along a distribution path (74) for the distribution of the harvested material (18) .

2. Method according to Claim 1, **characterized in that** the provided harvested material (18) is distributed in a silo (80).

3. Method according to Claim 1 or 2, **characterized in that** a position (P) and/or an orientation (W_n) of the distribution tool (16) is determined in a defined coordinate system (KS).

4. Method according to Claim 3, **characterized in that** the position (P) and/or orientation (W_n) of the distribution tool (16) relative to the silo (80) is determined.

5. Method according to one of the preceding claims, **characterized in that** the reference surface (72) is determined as a surface contour along a distribution path (74) for the distribution of the harvested material (18).

6. Method according to one of the preceding claims, **characterized in that** the working height (70) is defined such that the provided harvested material (18) to be distributed is distributed fully by means of the distribution tool (16) during a single crossing of a distribution path (74).

7. Method according to one of the preceding claims, **characterized in that** the distributed harvested material (18, 20) is compacted during a compacting operation.

8. Method according to Claim 7, **characterized in that** a degree of compaction (V_akt) of the compacted harvested material (76) is determined in dependence on at least one of the following variables:
- at least one parameter (P_ma) of a work machine used for compaction,
- at least one parameter (P_eg) of the harvested material (18),
- a number (Z_akt) of compacting cycles already carried out during the compacting operation.

9. Method according to Claim 8, **characterized in that**, depending on the determined degree of compaction (V_akt), an additional number (Z_zus) of compacting cycles is carried out during the compacting operation.

## Revendications

1. Procédé de distribution de produits récoltés fournis (18) au moyen d'un outil de distribution (16) pendant une opération de distribution, l'outil de distribution (16) étant monté mobile sur une machine de travail agricole (10) et commandé en mouvement de manière au moins partiellement automatique de telle sorte qu'une hauteur de travail définie (70) de l'outil de distribution (16) est réglée par rapport à une surface de référence (72), **caractérisé en ce que** la hauteur de travail (70) est adaptée pendant l'opération de distribution en fonction de produits récoltés résiduels (18_R), restant à distribuer pendant une opération de distribution et dont le volume ou la masse est estimé (e) par des moyens de détection (36, 38), et d'un trajet résiduel (74_R) restant le long d'un trajet de distribution (74) pour la distribution des produits récoltés (18).

2. Procédé selon la revendication 1, **caractérisé en ce que** les produits récoltés fournis (18) sont distribués dans un silo (80).

3. Procédé selon la revendication 1 ou 2, **caractérisé en ce qu'**une position (P) et/ou une orientation (W_n) de l'outil de distribution (16) est/sont déterminée(s) dans un système de coordonnées défini (KS).

4. Procédé selon la revendication 3, **caractérisé en ce que** la position (P) et/ou l'orientation (W_n) de l'outil de distribution (16) est/sont déterminée(s) par rapport au silo (80).

5. Procédé selon l'une quelconque des revendications précédentes, **caractérisé en ce que** la surface de référence (72) est déterminée sous forme de contour de surface le long d'un trajet de distribution (74) pour la distribution des produits récoltés (18).

6. Procédé selon l'une quelconque des revendications précédentes, **caractérisé en ce que** la hauteur de travail (70) est définie de telle sorte que les produits récoltés (18) fournis et à distribuer sont distribués complètement pendant un parcours unique d'un trajet de distribution (74) au moyen de l'outil de distribution (16).

7. Procédé selon l'une quelconque des revendications précédentes, **caractérisé en ce que** les produits récoltés distribués (18, 20) sont compactés pendant une opération de compactage.

8. Procédé selon la revendication 7, **caractérisé en ce qu'**un degré de compactage (V_akt) des produits récoltés compactés (76) est déterminé en fonction d'au moins l'une des grandeurs suivantes :
- au moins un paramètre (P_ma) d'une machine de travail utilisée pour le compactage,
- au moins un paramètre (P_eg) des produits récoltés (18),
- un nombre (Z_akt) de cycles de compactage déjà effectués pendant l'opération de compactage.

9. Procédé selon la revendication 8, **caractérisé en ce qu'**en fonction du degré de compactage déterminé (V_akt), un nombre supplémentaire (Z_zus) de cycles de compactage est effectué pendant l'opération de compactage.
